Europäisches Patentamt

European Patent Office

Office européen des brevets

(11) Publication number: **0 361 889**
**A2**

## EUROPEAN PATENT APPLICATION

(21) Application number: 89309830.1

(51) Int. Cl.5: **G02B 21/00 , G02B 21/06**

(22) Date of filing: 27.09.89

(30) Priority: 27.09.88 GB 8822668

(43) Date of publication of application:
04.04.90 Bulletin 90/14

(84) Designated Contracting States:
AT BE CH DE ES FR GB GR IT LI LU NL SE

(71) Applicant: **SCIENCE OF CAMBRIDGE LIMITED**
**Croxton Park**
**Croxton Cambridgeshire PE19 4SY(GB)**

(72) Inventor: **Curry, John Christopher**
**c/o Science of Cambridge Ltd. Croxton Park**
**Croxton Cambs PE19 4SY(GB)**
Inventor: **Dunning, Keith James**
**Forge & Ivy**
**Croxton Cambridgeshire(GB)**
Inventor: **Dickinson, Richard**
**Marlborough House**
**Cottenham Cambridgeshire(GB)**
Inventor: **Jones, Keith**
**3 Dwyer-Joyce Close**
**Histon Cambridgeshire(GB)**

(74) Representative: **Devons, David Jon et al**
**MARKS & CLERK 57-60 Lincoln's Inn Fields**
**London WC2A 3LS(GB)**

(54) Microscope.

(57) A microscope has a generally flat disc-like body, one of the flat surfaces (6) of which forms a viewing stage which is uncluttered and easily accessible. The illumination source (46,48) is mounted on an arc-shaped arm (10) pivotable about a radius of the body between a first position wherein illumination is provided to an object to be viewed by means of transmitted light and a second position wherein illumination is provided by means of reflected light. The viewing stage (6) is formed of magnetic material to hold a magnetic slide carrier securely thereon. The body has a housing projecting therefrom containing a circular eyepiece lens (70), and the body contains a square field lens (72).

FIG. 2.

Xerox Copy Centre

## MICROSCOPE

This invention relates to microscopes, and particularly to a compact microscope which is easily portable and therefore particularly suitable for use in the field.

It has previously been proposed to construct portable microscopes which are more compact than the conventional desk-type microscope by the use of folded light paths, but conventional devices of this type suffer from a number of drawbacks in practice, and in particular their small viewing stages, together with the arrangement of the illumination system, are usually such that the range of possible applications of the instrument is restricted.

According to the present invention there is provided a microscope having a substantially flat body incorporating a plurality of reflectors arranged so that a substantial proportion of the light path is folded, characterised in that the light path is folded in a single plane which is parallel to a flat outer surface of the body of the instrument which is arranged to form a viewing stage. Preferably the body is disc-shaped.

This arrangement enables the microscope to be made compact, without unduly restricting the size of the viewing stage.

According to another aspect of the invention, there is provided a microscope having a movable illumination source, whose position can be changed from a first positioned, relative to the viewing stage, in which it provides illumination by transmitted light, and a second position in which it provides illumination by reflected light. Preferably, the illumination source is mounted on an arm which is pivotally connected to the body of the microscope for movement between the first and second positions, the arm projecting outwardly from the body in the first position, so that the specimen to be viewed can be interposed between the illumination source and the body, in use, for viewing by transmitted light and the arm being folded into the body in the second position, so as to transmit light along an internal path which directs it onto the specimen for viewing by reflected light. The instrument is thus more versatile than known instruments since it can operate in two different modes.

According to a further feature of the invention, there is provided a microscope having a flat viewing stage of magnetic material, so that a magnetic slide carrier can be securely held on its surface. The carrier is preferably formed from a plastics material loaded with magnetic particles, and may be shaped so as to engage around the slide to hold it in position on the viewing stage. By this feature, a slide can be held firmly against the viewing stage in any desired position and is not restricted to predetermined positions which may not be adequately versatile.

According to a still further aspect of the invention, there is provided a compact microscope having an eyepiece comprising a circular eye lens in a housing projecting from the main body of the microscope, and a square field lens which is housed within the main body, so as to increase the effective field of view of the instrument. Such an arrangement increases the field of view of the microscope and is thus advantageous.

In a preferred embodiment of the invention, the microscope comprises a generally flat disc-like body, one of the flat surfaces of which forms the viewing stage, and the illumination source comprises a lamp which is mounted on an arc-shaped arm, one end of which is pivotable about a radius of the body, so that the arm can be moved between a first position in which it projects upwardly from the surface, and a second position in which it fits into a correspondingly arc-shaped recess at the periphery of the surface.

One embodiment of the invention will now be described by way of example only with reference to the accompanying drawings in which:

Figure 1 is a plan view of the microscope showing the illumination arm in the folded position;

Figure 2 is a horizontal cross-section through the microscope of Figure 1;

Figure 2a is a cross-sectional view of a detail of the apparatus shown in Figure 2 and taken on line II-II;

Figure 3 is a side edge view in the direction of the arrow A of Figure 2;

Figure 4 is a vertical cross-section taken along the line 4-4 of Figure 2;

Figure 5 is a vertical cross-section through the microscope of Figure 2, taken at right angles to the line 4-4;

Figure 6 is a side edge view of the microscope, taken at right angles to the arrow A of Figure 2, with the illumination arm in the outward position;

Figure 7 is a perspective view of a first type of slide holding device;

Figure 8 is a perspective view of a second type of slide holding device;

Figure 9 is a perspective view of a third type of slide holding device;

Figure 10 is a schematic view of an eyepiece optical system; and

Figure 11 is an outline perspective view of the eyepiece system in its operating position.

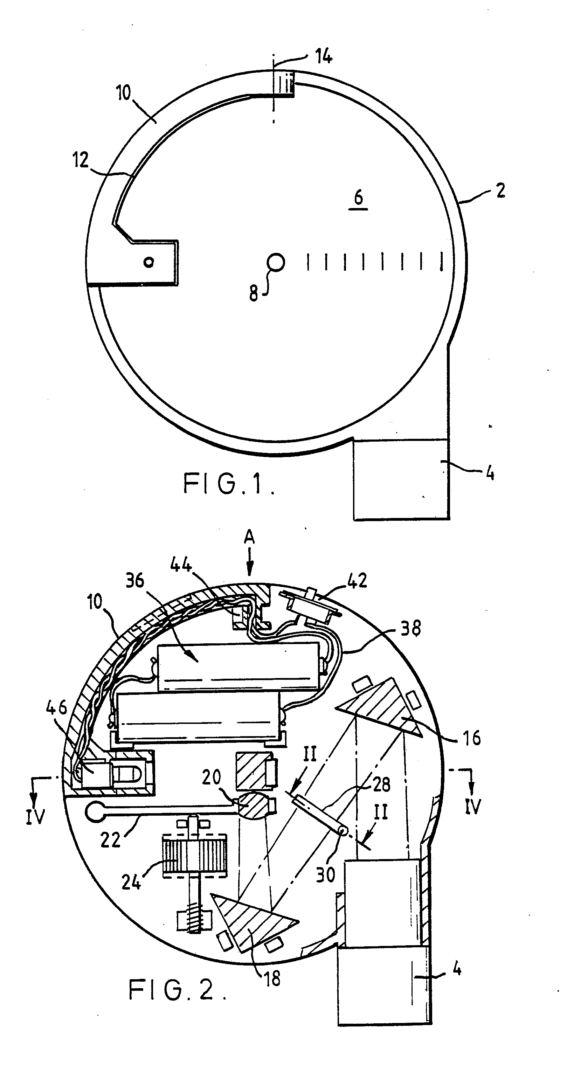

Referring to Figure 1, the microscope body comprises a generally flat disc-shaped casing 2 and an eyepiece housing 4 which extends generally tangentially from the casing 2. One flat disc-shaped side 6 forms a viewing stage, and is preferably constructed of PTFE coated steel so that magnetic carriers can be mounted easily upon it. The light path from the eyepiece 4 is folded within the body of the instrument, as explained in more detail below, and terminates at an exit aperture 8 at the centre of the stage 6.

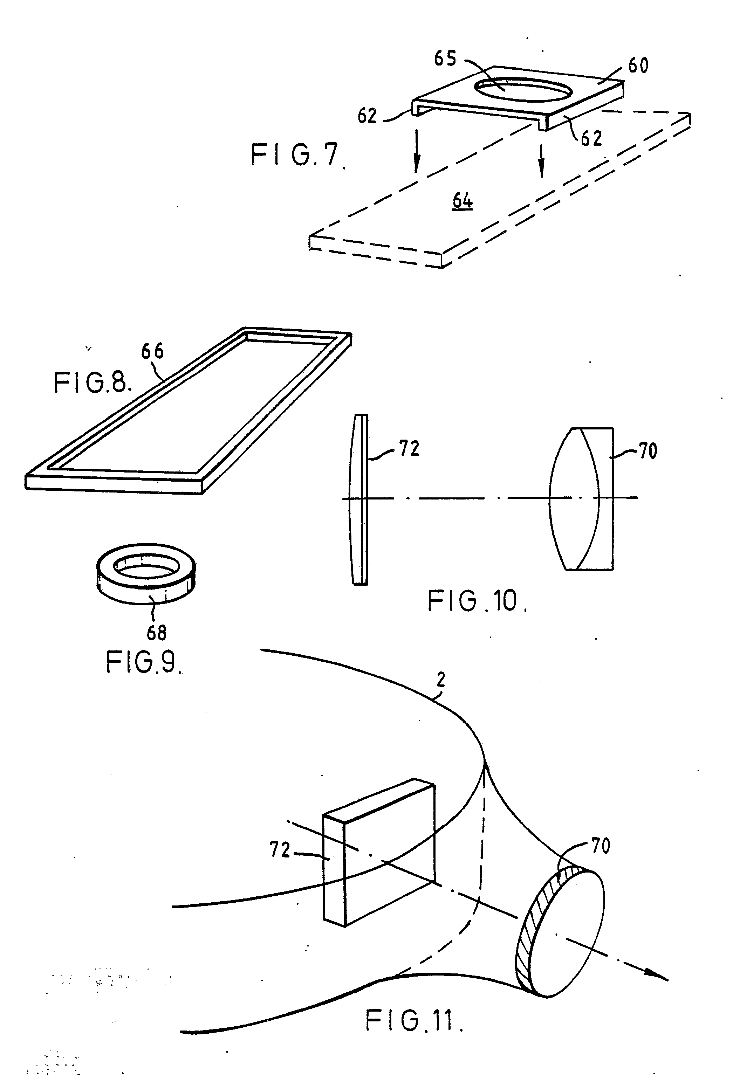

An arc-shaped arm 10 fits into a corresponding recess 12 in the periphery of the body and is pivotable about an axis 14 which is radial to the disc-shaped body, so that the arm can be pivoted between the position shown in Figure 1, in which is is coplanar with the body, and the position shown in Figure 6, in which it is at right angles to the plane of the body, as explained in more detail below.

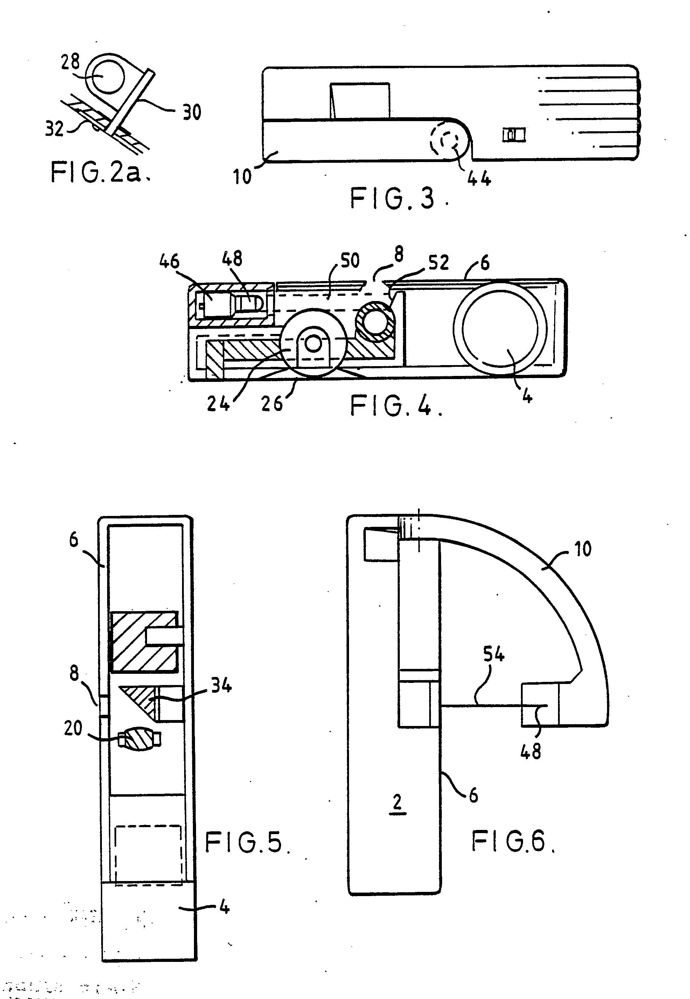

The internal constuction of the microscope is illustrated in more detail in Figure 2. The light path from the eyepiece 4, which preferably has a magnification of approximately x10, is folded by means of two prisms 16 and 18, into a "z" shape to reach an objective lens 20 close to the centre of the instrument. The objective lens 20 may for example have a magnification of approximately x8 and is mounted on a pivotable arm 22 for focusing purposes. A focusing wheel 24, which extends through a suitable aperture 26 (Figure 4) in the casing of the instrument, is rotatable in order to pivot the arm 22.

In order to provide an additional higher magnification, a supplementary negative lens 28 is mounted on a carousel pivotable about an axis 30, so that it can be swung into or out of the light path between the prisms 16 and 18. For this purpose an external wheel control 32 is also provided on the underside of the casing (see Figure 2a).

A prism 34 (Figure 5) is mounted beneath the exit aperture 8 of the microscope, completing the light path between the eyepiece 4 and an object or specimen to be viewed on the stage 6.

A battery compartment 36 provides power for the illumination system which is housed in the arm 10. It will be seen from Figure 2 that the wiring from the batteries is connected via switch 40 into the inner end 42 of the arm 10 which is formed with a tubular pivot fitted into a corresponding aperture in the casing 2. The wiring is passed down the arm 10 to a lamp holder 46 at the other end. As will be clear from the drawing, the arm is formed as a 90° arc so that the axis of the lamp holder 46 is at right angles to the pivot 44.

A prefocused bulb 48 (Figure 6) is mounted in the lamp holder 46 and, when the arm is in the inwardly folded position as illustrated in Figures 1 to 4, the light from the bulb 48 is directed radially inwardly along a path 50 (Figure 4) to the centre of the body, where it is reflected upwardly to the exit aperture 8 by means of a mirror 52 mounted adjacent the central prism 34. This provides a reflected illumination mode. Thus it will be clear from Figure 4 that the surface of an object abutting against the viewing stage 6 can then be examined by reflected light. Additionally when the arm 10 is in its inwardly folded position, the surface of the stage 6 is completely free of obstructing projections so that the microscope can be used in its alternative, reflected illumination mode to examine any flat surface without formations of the instrument casing itself obstructing contact with the specimen. For example, the entire body of the microscope can be placed against a fixed surface to enable it to be examined.

When a slide mounted specimen is to be examined, the arm 10 is pivoted upwardly so that it extends at 90° to the surface 6, as shown in Figure 6, so that the light from the lamp 48 is directed towards the exit aperture 8 from outside the body and in this way the slide mounted on the stage 6 is illuminated by transmitted light. It will be appreciated that, because of the large flat uncluttered area presented by the stage 6, it is easy to manipulate the slide to any desired position.

Figure 7 shows a slide holder which is particularly adapted for use with a preferred construction of the microscope body in which the viewing stage 6 (c f Figure 1) is made of a magnetic material such as steel. The holder 60 comprises a rectangular plate having downwardly depending flanges 62 which engage around the edges of a slide 64 (shown in broken lines) and is made of a plastics material loaded with magnetic particles so as to securely engage with the stage 6. An aperture 65 allows light to pass through the slide. An alternative form of holder 66 shown in Figure 8 is again moulded from a magnetic plastics material and is in the form of a "picture frame" which fits around the edges of the side, and another possible configuration 68, Figure 9, comprises a ring-shaped magnetic member which sits on top of the slide, with light passing through the centre. This device has the advantage that it can be used with slides of various sizes.

Figure 10 shows a preferred form of wide-field eyepiece construction in which the eyelens 70 is circular, whilst the field lens 72 is square, providing a wider field of view than can normally be achieved. This is possible because the body of the microscope is not a cylindrical barrel as with a conventional instrument, and thus, as shown in Figure 11, the eyelens 70 can project out of the casing 2 whilst the field lens 72 is enclosed within the casing.

**Claims**

1. A microscope having a substantially flat body incorporating a plurality of reflectors (16, 18, 20) arranged so that a substantial proportion of the light path is folded, characterised in that the light path is folded in a single plane which is parallel to a flat outer surface (6) of the body of the instrument which is arranged to form a viewing stage.

2. A microscope as claimed in Claim 1, wherein the reflectors (16, 18, 20) are mirrors or prisms.

3. A microscope as claimed in Claim 1 or 2, wherein the body is substantially disc-shaped.

4. A microscope having an illumination source (46,48) for illuminating an object to be viewed which is located on a viewing stage (6), characterised in that the illumination source (46,48) is movable relative to the viewing stage (6) between a first position wherein illumination is provided to the object to be viewed by means of transmitted light and a second position wherein illumination is provided to the object to be viewed by reflected light.

5. A microscope as claimed in Claim 4, wherein the illumination source (46,48) is mounted on an arm (10) which is pivotably connected to the body of the microscope for pivotal movement between the first and second positions, the arm (10) projecting outwardly from the body of the microscope in the first position such that the object to be viewed may be interposed between the illumination source (46,48) and the body for viewing by transmitted light, and the arm (10) being folded into the body in the second position so as to enable light to be transmitted along an internal path (50) and be directed onto the object to be viewed by reflected light.

6. A microscope as claimed in Claim 4 or 5, wherein the arm (10) is arc-shaped and, in the second position, is located within a corresponding recess (12) in the body.

7. A microscope having a flat viewing stage (6) for locating an object to be viewed, characterised in that the viewing stage (6) is of a magnetic material in order that a magnetic slide carrier can be securely held thereon.

8. A microscope as claimed in Claim 7, wherein the viewing stage (6) is of PTFE-coated steel.

9. A slide carrier for use with a microscope as claimed in Claim 7 or 8, characterised in that the carrier (60,66,68) is of a plastics material loaded with magnetic particles.

10. A slide carrier as claimed in Claim 9, wherein the carrier (60,66,68) is shaped to engage around a slide (64) and to hold the slide (64) in a desired position against the viewing stage (6) by magnetism.

11. A microscope having a main body and an eyepiece (4) comprising a circular lens (70) located in a housing projecting from the main body, characterised in that a square field lens (72) is provided within the main body.

12. A microscope as claimed in Claim 11, wherein a folded light path is defined within the main body, the folded light path lying in a single plane parallel to a planar surface (6) of the main body.

FIG.1.

FIG.2.

28

30

32

FIG.2a.

10

44

FIG.3.

46 48 50 8 52 6

24 26 FIG.4. 4

6

8

20

34

FIG.5.

4

10

54

48

2 6

FIG.6.

FIG.7.

FIG.8.

FIG.9.

FIG.10.

FIG.11.